# EUROPÄISCHE PATENTSCHRIFT

(11) **EP 1 057 239 B1**
(45) Veröffentlichungstag und Bekanntmachung des Hinweises auf die Patenterteilung: **26.04.2006**
(21) Anmeldenummer: 99973442.9
(22) Anmeldetag: 05.10.1999
(51) Int. Cl.: H02K 5/14, H02K 11/00

(54) **ELEKTRISCHER GETRIEBEMOTOR FÜR FAHRZEUGAGGREGATE**
ELECTRICAL GEAR MOTOR FOR AUTOMOBILE UNITS
MOTEUR A ENGRENAGE ELECTRIQUE POUR GROUPES DE VEHICULE

(30) Priorität: 17.12.1998 DE 19858233
(43) Veröffentlichungstag der Anmeldung: 06.12.2000
(73) Patentinhaber: ROBERT BOSCH GMBH, 70442 Stuttgart (DE)
(72) Erfinder: LAUF, Detlef, D-77871 Renchen (DE); FISCHER, Ernst, D-76593 Gernsbach (DE); KARCHER, Hansjörg, D-77830 Bühlertal (DE); HERP, Jürgen, D-77815 Bühlertal (DE); MAURER, Erik, D-77815 Bühlertal (DE); WIEGERT, Andreas, D-77876 Kappelrodeck (DE); SCHNEIDER, Christian, D-77830 Bühlertal (DE); BOCK, Bernd, D-77830 Bühlertal (DE); HURST, Richard, D-77656 Offenburg (DE)
(86) Internationale Anmeldenummer: PCT/DE1999/003195
(87) Internationale Veröffentlichungsnummer: WO 2000/036729

(56) Entgegenhaltungen:
- EP-A- 0 244 252
- EP-A- 0 282 377
- EP-A- 0 614 251
- EP-A- 0 712 195
- DE-A- 4 422 988

## Beschreibung

### Stand der Technik

Die Erfindung geht aus von einem elektrischen Getriebemotor zum Antreiben von Fahrzeugaggregaten, wie Front- und Heckscheibenwischer, Fensterheber u.dgl., der im Oberbegriff des Anspruchs 1 definierten Gattung.

Ein bekannter Getriebemotor für Fensterheber in Kraftfahrzeugen (DE 90 13 006 U1) weist ein an das kommutatorseitige Ende des Kommutatormotors sich anschließendes Getriebegehäuse auf, in das die verlängerte Motorwelle als Getriebeantriebswelle (Schneckenwelle) hineinragt. In einem Elektronikgehäuse ist eine mit einem äußeren Anschlußstecker und Kommutatorbürsten sowie mit Bauelementen einer Motorelektronik elektrisch verbundene Leiterplatte angeordnet. Die Leiterplatte weist ein einstückiges Aufnahmeteil für die Bürstenhalterung und ein einstückiges Aufnahmeteil für den Anschlußstecker auf. Die elektrischen Anschlüsse der Bauelemente, der Kommutatorbürsten und der Anschlußstecker sind mit den Leiterbahnen der Leiterplatte kontaktiert. Die Kommutatorbürsten sind diametral am Kommutator angeordnet und jeweils in einem in der Bürstenhalterung ausgebildeten Köcher radial verschieblich gehalten. Das Elektronikgehäuse ist Bestandteil des Getriebegehäuses und durch einen mit dem Getriebegehäusedeckel einstückigen Elektronikgehäusedeckel verschlossen.

Weitere Getriebe motoren mit Bürstenhalter and kommutatorbürsten werden in EP-A-614251, EP-A-244252 und EP-A-282377 offenbart.

### Vorteile der Erfindung

Der erfindungsgemäße elektrische Getriebemotor zum Antreiben von Fahrzeugaggregaten hat den Vorteil, daß durch die Ausbildung des Bürstenträgers als U-förmiges Trägerteil einerseits und durch die Ausbildung der Kommutatorbürsten als sog. Hammerbürsten andererseits eine kostengünstige Herstellung des Bürstenhalters und eine zeitsparende, einfache Montage gewährleistet ist, da der Bürstenhalter nach fertigmontiertem Getriebemotor in einem einzigen Arbeitsgang durch die Gehäuseöffnung im Getriebegehäuse hindurch radial über den Kommutator geschoben werden kann und dabei im Getriebegehäuse hochgenau positioniert wird. Irgendwelche zusätzlichen Manipulationen oder Justiermaßnahmen sind nicht erforderlich. Da die Hammerbürsten am Bürstenhalter fixiert sind, liegen auch deren Schleifkörper, auch Schleifkohlen genannt, nach Einsetzen des Bürstenhalters positionsgenau auf dem Kommutatorumfang. Mit Schließen des Getriebegehäuses durch den Getriebedeckel ist der Bürstenhalter ohne weitere Maßnahmen sicher fixiert.

Die Hammerbürsten haben den Vorteil, daß die Federbleche sehr gut Wärme von den Schleifkörpern ableiten und damit das Trägerteil selbst keine wärmeableitende Funktion übernehmen muß, so daß es preiswert aus Kunststoff gefertigt werden kann. Die Fertigung des Trägerteils aus Kunststoff ermöglicht durch Anspritzen weiterer Taschen an das Trägerteil das Einsetzen von Bauteilenfür die Motorelektronik, wie Thermoschalter, Entstörelemente (Kondensator, Drossel), in den Bürstenhalter selbst und damit eine vereinfachte Montage nach vorheriger Bestückung des Bürstenhalters.

Durch die in den weiteren Ansprüchen aufgeführten Maßnahmen sind vorteilhafte Weiterbildungen und Verbesserungen des im Anspruch 1 angegebenen elektrischen Getriebemotors möglich.

Gemäß einer bevorzugten Ausführungsform der Erfindung ist zwischen der dem Getriebedeckel zugekehrten Unterseite des Trägerteils und der Innenseite des Getriebedeckels mindestens ein Elastomerelement angeordnet, das vorzugsweise Teil einer an den Getriebedeckel angespritzten Dichtung, z.B. aus gummiartigem Material, ist. Durch diese Maßnahmen wird eine weitgehende Entkopplung des Bürstenhalters von dem ebenfalls aus Kunststoff gefertigten Getriebedeckel erzielt und damit eine Geräuschreduzierung erreicht.

Gemäß einer vorteilhaften Ausführungsform der Erfindung sind an den freien Enden der Federhebel der Hammerbürsten Fügehilfen zum Aufschieben des Bürstenhalters auf den Kommutator ausgebildet. Durch diese vorzugsweise als Nasen mit Anlaufschrägen vom Ende der Federhebel nach außen abgewinkelten Fügehilfen wird das Aufschieben der Hammerbürsten auf den Kommutator wesentlich erleichtert, und die Montage des Bürstenhalters kann ohne Hilfswerkzeuge durchgeführt werden.

Gemäß einer vorteilhaften Ausführungsform der Erfindung sind die Anschlußlitzen für die Hammerbürsten in an dem Trägerteil, vorzugsweise einstückig mit diesem, ausgebildeten Klemmgabeln fixiert. Dadurch wird eine die Montage erleichternde Festlegung der Anschlußlitzen erreicht, die für eine Geräuschreduzierung und erhöhter Lebensdauer des Motors unerläßlich ist.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines Getriebemotors für einen Fahrzeug-Scheibenwischer,
- Fig. 2: einen Schnitt des leeren Getriebegehäuses des Getriebemotors längs der Linie II-II in Fig. 1,
- Fig. 3: eine Seitenansicht eines Bürstenhalters im Getriebemotor gemäß Fig. 1,
- Fig. 4: jeweils eine gleiche Darstellung wie in Fig. 3 des
- und 5: Bürstenhalters gemäß zweier weiterer Ausführungsbeispiele.

### Beschreibung des Ausführungsbeispiels

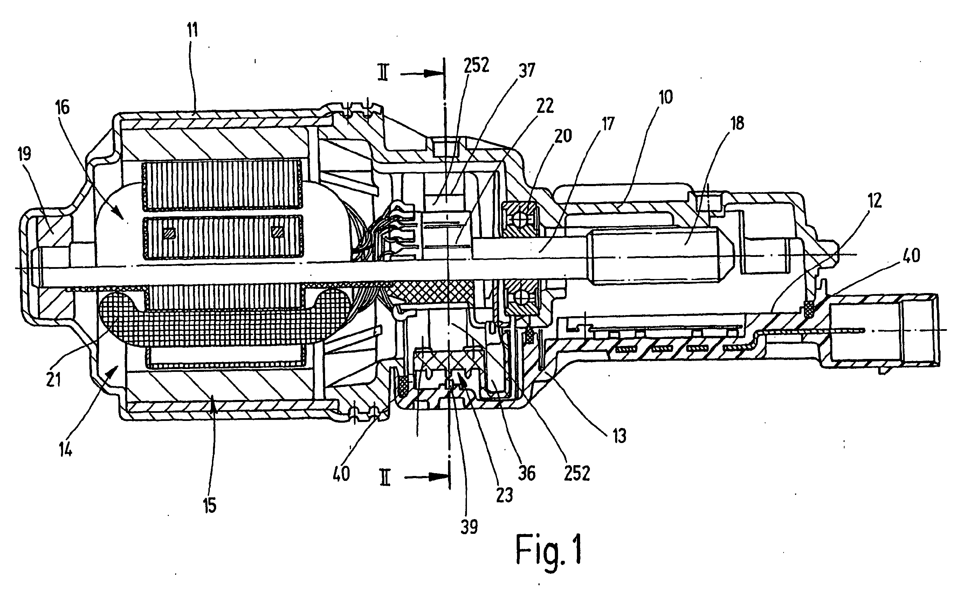

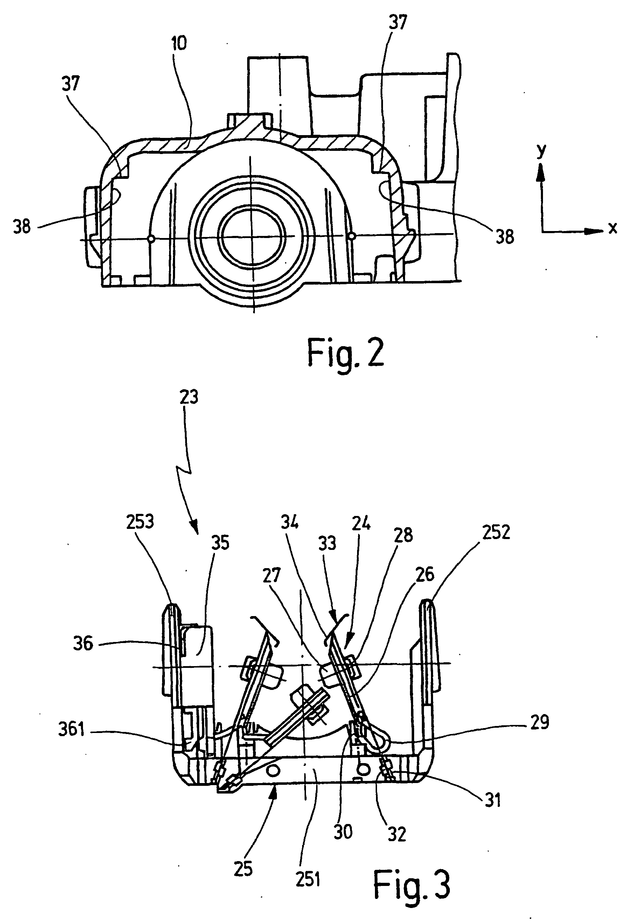

Der in Fig. 1 im Längsschnitt dargestellte elektrische Getriebemotor für einen Scheibenwischer in Kraftfahrzeugen als Ausführungsbeispiel für ein allgemeines Fahrzeugaggregat weist ein Getriebegehäuse 10 und ein an dieses angesetztes Motorgehäuse 11 auf. Das Getriebegehäuse 10, das ein hier nicht dargestelltes Getriebe aufnimmt, weist eine Montageöffnung 12 auf, die von einem Gehäusedeckel 13 unter Zwischenlage einer Dichtung 14 abgeschlossen ist. Im Motorgehäuse 11 ist ein Kommutatormotor 14 mit Stator 15 und Rotor 16 aufgenommen, dessen den Rotor 16 tragende verlängerte Rotorwelle 17 als eine ein Schneckenrad 18 tragende Getriebeantriebswelle des Getriebes in das Getriebegehäuse 10 hineinragt und einerseits in einem Gleitlager 19 im Motorgehäuse 11 und andererseits in einem Wälzlager 20 im Getriebegehäuse 10 drehend gelagert ist. Eine im Rotor 16 aufgenommene Rotorwicklung 21 ist mit den Kommutatorlamellen eines drehfest auf der Rotorwelle 17 sitzenden Kommutators 22 elektrisch leitend verbunden. Ein Bürstenhalter 23 mit drei Kommutatorbürsten 24 (Fig. 3) für den Betrieb des Kommutatormotors 14 mit zwei unterschiedlichen Drehzahlen ist im Getriebegehäuse 10 formschlüssig positioniert und fixiert.

Wie aus Fig. 3 hervorgeht, besitzt der in Fig. 1 nur im Schnitt zu sehende Bürstenhalter 23 ein U-förmiges Trägerteil 25 aus Kunststoff, an dem die drei als Hammerbürsten ausgebildeten Kommutatorbürsten 24 festgelegt sind. Jede Hammerbürste 24 weist einen zum Kommutator 22 hin vorgespannten Federhebel 26 auf, der mit seinem einen Hebelende in dem Joch 251 des U-förmigen Trägerteils 25 befestigt ist und an seinem anderen Hebelende einen Schleifkörper für die Stromabnahme bzw. Stromzufuhr vom bzw. zum Kommutator 22, hier eine Schleifkohle 27, trägt. Die Schleifkohle 27, die durch die Federkraft des Federhebels 26 auf den Umfang des Kommutators 22 aufgedrückt wird, ist von der vom Kommutator 22 abgekehrten Rückseite des Federhebels 26 her durch eine Ausnehmung im Federhebel 26 hindurchgesteckt und mittels einer am Federhebel 26 ausgebildeten Lasche 28 gegen Axialverschiebung fixiert. Jede Schleifkohle 27 ist in bekannter Weise über eine Anschlußlitze 29 mit einem hier nicht dargestellten Anschlußstecker verbunden, wobei die Anschlußlitze 29 entweder in der Schleifkohle 27 eingesintert oder an dem Federhebel 26 angebondet sein kann. Zur Festlegung der Anschlußlitze 29 ist diese in einer an dem Joch 251 des U-förmigen Trägerteils 25 angespritzen Klemmgabel 30 festgeklemmt.

Die Festlegung der Federhebel 26 im Trägerteil 25 kann auf unterschiedliche Weise erfolgen. Im Ausführungsbeispiel der Fig. 3 weist das Trägerteil 25 insgesamt drei Schlitze 31 auf, die von einer Seite des Trägerteils 25 her eingebracht sind und durch ihre Ausrichtung zur Achse des Bürstenhalters 23 die Lage der Federhebel 26 vorgeben. Die drei Federhebel 26 sind mit ihrem einen Hebelende in die Schlitze 31 eingedrückt. Zur genauen Positionierung können die Federhebel 26 - wie im Ausführungsbeispiel der Fig. 3 - endseitig noch mit Fahnen 32 zur genauen Positionierung der Federhebel 26 in den Schlitzen 31 versehen sein. Das Herausrutschen der Federhebel 26 aus den Schlitzen 31 wird durch Abdeckstücke verhindert, die nach Einsetzen der Federhebel 26 in die Schlitze 31 kraft- und formschlüssig eingedrückt werden.

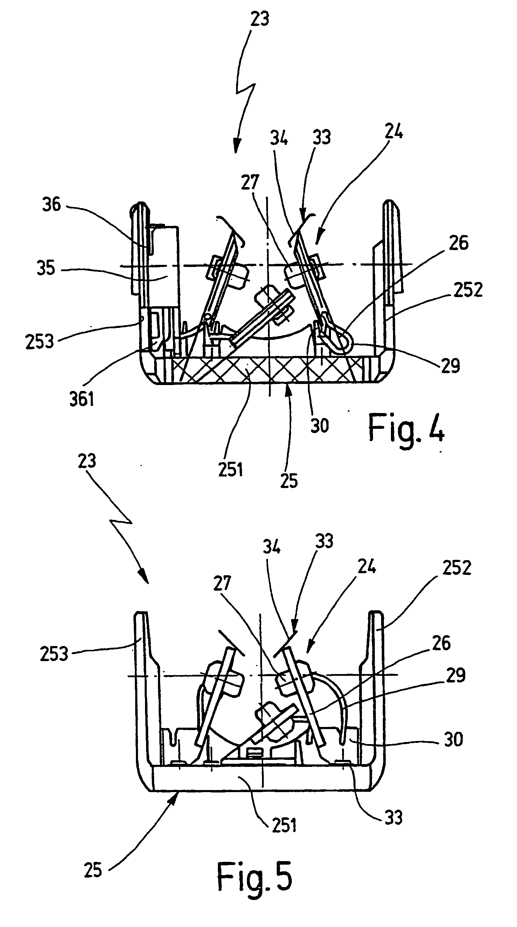

Im Ausführungsbeispiel der Fig. 4 sind die Federhebel 26 als Einlegeteile ausgebildet, die beim Spritzen des Kunststoff-Trägerteils 25 endseitig mit eingespritzt werden.

Im Ausführungsbeispiel der Fig. 5 sind die Hebelenden der Federhebel 26 abgewinkelt und auf der Innenseite des Jochs 251 des U-förmigen Trägerteils 25 befestigt. Die Befestigung kann durch Ultraschall-Schweißen, Verschrauben oder durch Warmverstemmen erfolgen. Im letzteren Fall sind am Trägerteil 25 Positionszapfen 33 ausgebildet, auf die die abgewinkelten Hebelenden der Federhebel 26 beim Warmverstemmen aufgesetzt werden.

Bei der Herstellung des Bürstenhalters 23 gemäß Fig. 5 können die Federhebel 26 als Einzelteile hergestellt und separat mit dem Trägerteil 25 verbunden werden. Vorteilhaft für die Montage ist es, die Federhebel 26 aus einem einzigen Federblech miteinander einstückig zu fertigen, und erst nach Befestigung an dem Trägerteil 25 die Federhebel 26 voneinander zu trennen, wozu im Federblech bereits Trennstellen vorgesehen werden.

Bei allen Bürstenhaltern 23 gemäß Fig. 3 - 5 tragen die Federhebel 26 der beiden am Kommutator 22 einander diametral gegenüberliegenden Federhebel 26 sog. Fügehilfen 33, die das Aufschieben der Hammerbürsten 24 auf den Kommutator 22 bei der Montage des Bürstenhalters 23 erleichtern. Diese Fügehilfen 33, die in Fig. 3 - 5 nur schematisch angedeutet sind, bestehen aus von dem Ende der Federhebel 26 nach außen abgespreizten Laschen 34, die bei der Montage des Bürstenhalters 23 auf den Kommutatorumfang aufgleiten und dadurch ein leichtes Aufspreizen der einander gegenüberliegenden beiden Hammerbürsten 24 durch den Kommutator 22 ermöglichen.

In den beiden Ausführungsbeispielen des Bürstenhalters 23 gemäß Fig. 3 und 4 ist am Trägerteil 25 noch eine Tasche 35 angespritzt, in der ein Thermoschalter 36 eingesteckt ist, der auf einem Kühlblech 361 montiert ist. Möglich ist es, weitere Taschen zur Aufnahme von Entstörelementen (Kondensator, Drossel) an das Trägerteil 25 anzuspritzen.

Bei der Montage des Getriebemotors wird der komplettierte Bürstenhalter 23 bei endmontiertem Getriebemotor durch die noch offene Gehäuseöffnung 12 im Getriebegehäuse 10 hindurch radial zur Rotorwelle 17 in das Getriebegehäuse 10 eingesetzt, wobei sich die beiden einander gegenüberliegenden Kommutatorbürsten 24 auf den Kommutator 22 aufschieben. In der Endposition des Bürstenhalters 23 liegen die Schleifkohlen 27 der beiden einander gegenüberliegenden Hammerbürsten 24 positionsgenau auf dem Umfang des Kommutators 22, und auch die Schleifkohle 27 der dritten Hammerbürste 24 wird positionsgenau auf den Kommutatorumfang aufgedrückt. Für die genaue Positionierung des Bürstenhalters 23 im Getriebegehäuse 10 sorgen im Getriebegehäuse ausgebildete Positionierflächen 37,38 (Fig. 2), an die sich die vorderen Enden der beiden Schenkel 252 und 253 des U-förmigen Trägerteils 25 formschlüssig anlegen. Die beiden Positionierflächen 37 sorgen dabei für eine Positionierung des Bürstenhalters 23 in y-Richtung und die beiden Positionierflächen 38 in x-Richtung des in Fig. 2 eingezeichneten Koordinatensystems y,x, so daß der Bürstenhalter 23 in zwei rechtwinklig zueinander ausgerichteten Radialrichtungen bezüglich des Kommutators 22 festgelegt ist.

Nach Einschieben des Bürstenhalters 23 in das Getriebegehäuse 10 wird als letztes die Gehäuseöffnung 12 durch Aufsetzen und Verschrauben des Gehäusedeckels 13 geschlossen. Dabei drückt sich der Gehäusedeckel 13 mit einem an seiner ins Gehäuseinnere weisenden Innenseite angespritzten Elastomerelement 39 an das Joch 251 des Trägerteils 25 an und fixiert so zusammen mit den Positionierflächen 37,38 den Bürstenhalter 23 unverschieblich im Getriebegehäuse 10. Dieses Elastomerelement 29 ist Teil einer an der Innenseite des Gehäusedeckels 13 angespritzten Dichtung 40 aus gummiartigem Material, die die Gehäuseöffnung 12 zwischen Getriebegehäuse 10 und Gehäusedeckel 13 wasser- und staubdicht verschließt.

## Patentansprüche

1. Elektrischer Getriebemotor zum Antreiben von Fahrzeugaggregaten, wie Front- und Heckscheibenwischer, Fensterheber o.dgl., mit einem Getriebegehäuse (10), das eine von einem Gehäusedeckel (13) verschließbare Gehäuseöffnung (12) aufweist, mit einem mit dem Getriebegehäuse (10) verbundenen Motorgehäuse (11), mit einem im Motorgehäuse (11) aufgenommenen Kommutatormotor (14), der mit einer einen Kommutator (22) tragenden, verlängerten Rotorwelle (17) in das Getriebegehäuse (10) hineinragt, und mit einem im Getriebegehäuse (10) festgelegten Bürstenhalter (23), der mindestens zwei am Kommutator (22) mit Federkraft anliegende Kommutatorbürsten (24) trägt, und ein U-förmiges Trägerteil aufweist, **dadurch gekennzeichet dass** die Kommutatorbürsten (24) als Hammerbürsten mit zum Kommutator (22) hin vorgespannten Federhebeln (26) ausgebildet sind, die jeweils mit ihrem einen Hebelende in dem Joch (251) des U-förmigen Trägerteils (25) festgelegt sind und an ihrem anderen Hebelende einen auf dem Kommutator (22) aufliegenden Schleifkörper (27) tragen, und dass der Bürstenhalter (23) durch die Gehäuseöffnung (12) im Getriebegehäuse (10) hindurch radial zum Kommutator (22) in das Getriebegehäuse (10) eingesetzt und das Trägerteil (25) im Getriebegehäuse (10) formschlüssig positioniert ist.

2. Motor nach Anspruch 1, **dadurch gekennzeichnet, daß** die Positionierung des Trägerteils (25) in zueinander rechtwinkligen Radialrichtungen (y,x) bezüglich des Kommutators (22) durch im Getriebegehäuse (10) ausgebildete Positionierflächen (37,38) vorgenommen ist.

3. Motor nach Anspruch 1 oder 2, **dadurch gekennzeichnet, daß** das Trägerteil (25) durch den auf die Gehäuseöffnung (12) aufgesetzten Gehäusedeckel (13) im Getriebegehäuse (10) fixiert ist.

4. Motor nach Anspruch 3, **dadurch gekennzeichnet, daß** zwischen der dem Gehäusedeckel (13) zugekehrten Seite des Trägerteils (25) und der Innenseite des Getriebedeckels (13) mindestens ein Elastomerelement (39) angeordnet ist.

5. Motor nach Anspruch 4, **dadurch gekennzeichnet, daß** das mindestens eine Elastomerelement Teil einer an den Gehäusedeckel (13) angespritzten Dichtung (40) ist, die vorzugsweise aus gummiartigem Material und an dem aus Kunststoff hergestellten Gehäusedeckel (13) angespritzt ist.

6. Motor nach einem der Ansprüche 1 - 5, **dadurch gekennzeichnet, daß** zur Festlegung der Federhebel (26) an dem Trägerteil (25) das Trägerteil (25) an seiner einen Seite mündende Schlitze (31) aufweist, in die die Federhebel (26) mit ihren Hebelenden klemmend eingeschoben sind (Fig. 3).

7. Motor nach Anspruch 6, **dadurch gekennzeichnet, daß** die Schlitze (31) im Trägerteil (25) so ausgerichtet sind, daß die Federhebel (26) nach Einschieben ihrer Hebelenden in den jeweils zugeordneten Schlitz (31) bezüglich des Kommutators (22) genau positioniert sind.

8. Motor nach einem der Ansprüche 1 - 5, **dadurch gekennzeichnet, daß** die Federhebel (26) als Einlegeteile ausgebildet sind, die beim Herstellen des als Kunststoff-Spritzteil ausgeführten Trägerteils (25) endseitig mit eingespritzt werden.

9. Motor nach einem der Ansprüche 1 - 5, **dadurch gekennzeichnet, daß** die Hebelenden der Federhebel (26) abgewinkelt und auf der zu U-Öffnung weisenden Innenseite des Trägerteils (25) ultrageschweißt, verschraubt oder warmverstemmt sind.

10. Motor nach Anspruch 9, **dadurch gekennzeichnet, daß** die Federhebel (26) einstückig miteinander sind und nach Festlegen an dem Trägerteil (25) vorzugsweise an vorbereiteten Trennstellen voneinander separiert werden.

11. Motor nach einem der Ansprüche 1 - 10, **dadurch gekennzeichnet, daß** an den Federhebeln (26) Laschen (28) zur form- und kraftschlüssigen Fixierung der Schleifkörper (27) ausgebildet sind.

12. Motor nach einem der Ansprüche 1 - 11, **dadurch gekennzeichnet, daß** an den freien Enden der Federhebel (26) Fügehilfen (33) zum Aufschieben der Federhebel (26) auf den Kommutator (22), vorzugsweise einstückig mit jedem Federhebel (26), ausgebildet sind.

13. Motor nach einem der Ansprüche 1 - 12, **dadurch gekennzeichnet, daß** Anschlußlitzen (29) für die Schleifkörper (27) in an dem Trägerteil (25), vorzugsweise einstückig mit diesem, ausgebildeten Kleamngabeln (30) fixiert sind.

14. Motor nach einem der Ansprüche 1 - 13, **dadurch gekennzeichnet, daß** in das Trägerteil (25) ein Thermoschalter (36) eingeclipst ist und vorzugsweise daß der Thermoschalter (36) auf einem Masseblech (361) fixiert ist.

## Claims

1. Electric gear motor for driving vehicle assemblies, such as front and rear windscreen wipers, window winders or the like, having a gear-mechanism housing (10) which has a housing opening (12) which can be closed by a housing cover (13), having a motor housing (11) which is connected to the gear-mechanism housing (10), having a commutator motor (14) which is accommodated in the motor housing (11) and, with an extended rotor shaft (17) which is fitted with a commutator (22), protrudes into the gear-mechanism housing (10), and having a brush holder (23) which is secured in the gear-mechanism housing (10), is fitted with at least two commutator brushes (24) which rest on the commutator (22) with spring force, and has a U-shaped carrier part, **characterized in that** the commutator brushes (24) are in the form of hammer brushes with spring levers (26) which are prestressed towards the commutator (22) and are each secured in the yoke (251) of the U-shaped carrier part (25) with one of their lever ends, and, at their other lever end, are fitted with an abrasive body (27) which rests on the commutator (22), and **in that** the brush holder (23) is inserted into the gear-mechanism housing (10) through the housing opening (12) in the gear-mechanism housing (10) radially with respect to the commutator (22), and the carrier part (25) is positioned in the gear-mechanism housing (10) in an interlocking manner.

2. Motor according to Claim 1, **characterized in that** the carrier part (25) is positioned in radial directions (y, x), which are at right angles to one another, with respect to the commutator (22) by means of positioning areas (37, 38) which are formed in the gear-mechanism housing (10).

3. Motor according to Claim 1 or 2, **characterized in that** the carrier part (25) is fixed in the gear-mechanism housing (10) by the housing cover (13) which is placed on the housing opening (12).

4. Motor according to Claim 3, **characterized in that** at least one elastomeric element (39) is arranged between that face of the carrier part (25) which is directed towards the housing cover (13) and the inner face of the gear-mechanism cover (13).

5. Motor according to Claim 4, **characterized in that** the at least one elastomeric element is part of a seal (40) which is injection-moulded onto the housing cover (13) and is preferably made of a rubber-like material and is injection-moulded on the housing cover (13) which is produced from plastic.

6. Motor according to one of Claims 1-5, **characterized in that**, in order to secure the spring levers (26) to the carrier part (25), the carrier part (25) has slots (31) which are open at one of its faces and into which the ends of the spring levers (26) are pushed in a clamping manner (Fig. 3).

7. Motor according to Claim 6, **characterized in that** the slots (31) in the carrier part (25) are oriented in such a way that the spring levers (26) are precisely positioned with respect to the commutator (22) after their lever ends are pushed into the respectively associated slot (31).

8. Motor according to one of Claims 1-5, **characterized in that** the spring levers (26) are in the form of insertion parts whose ends are also injection-moulded when the carrier part (25) which is in the form of an injection-moulded plastic part is produced.

9. Motor according to one of Claims 1-5, **characterized in that** the ends of the spring levers (26) are angled and are ultrasonically welded, screwed or hot-caulked on the inner face, which faces the U-opening, of the carrier part (25).

10. Motor according to Claim 9, **characterized in that** the spring levers (26) are integral with one another and are separated from one another, preferably at prepared separating points, after being secured to the carrier part (25).

11. Motor according to one of Claims 1-10, **characterized in that** tabs (28) for fixing the abrasive bodies (27) in an interlocking and force-fitting manner are formed on the spring levers (26).

12. Motor according to one of Claims 1-11, **characterized in that** joining aids (33) for pushing the spring levers (26) onto the commutator (22) are formed at the free ends of the spring levers (26), preferably integrally with each spring lever (26).

13. Motor according to one of Claims 1-12, **characterized in that** pigtail leads (29) for the abrasive bodies (27) are fixed in clamping forks (30) which are formed, preferably integrally, on the carrier part (25).

14. Motor according to one of Claims 1-13, **characterized in that** a thermal switch (36) is clipped into the carrier part (25), and preferably **in that** the thermal switch (36) is fixed on an earth plate (361).

## Revendications

1. Moto-réducteur électrique pour l'entraînement d'équipement d'un véhicule, comme les essuie-glaces avant et arrière, les lève-vitres ou analogues, comprenant un boîtier d'engrenage (10), qui comporte une ouverture de boîtier (12) pouvant être fermée par un couvercle de boîtier (13), un boîtier de moteur (11) assemblé au boîtier d'engrenage (10), un moteur à collecteur (14) logé dans le boîtier de moteur (11) et qui pénètre dans le boîtier d'engrenage (10) avec un arbre de rotor prolongé (17) portant un collecteur (22), et un porte-balais (23) fixé dans le boîtier d'engrenage (10), et présentant une pièce de support en forme de U, qui porte au moins deux balais de collecteur (24) appliqués sur le collecteur (22) avec une force élastique
**caractérisé en ce que**
les balais de collecteur (24) sont réalisés sous forme de balais batteurs avec des leviers élastiques (26) précontraints en direction du collecteur, dont chacun est fixé par leur première extrémité de levier dans l'armature (251) de la pièce de support en forme de U (25), et qui portent à leur autre extrémité de levier un corps frotteur (27) appliqué sur le collecteur (22), le porte-balais (23) est introduit radialement dans le boîtier d'engrenage (10) vers le collecteur (22) à travers l'ouverture de boîtier (12) dans le boîtier d'engrenage (10), et la pièce de support (25) est positionnée par complémentarité de formes dans le boîtier d'engrenage (10).

2. Moteur selon la revendication 1,
**caractérisé en ce que**
le positionnement de la pièce de support (25) dans des directions radiales (y, x) par rapport au collecteur (22) et perpendiculaires l'une à l'autre est effectué par des faces de positionnement (37, 38) formées dans le boîtier d'engrenage (10).

3. Moteur selon la revendication 1 ou 2,
**caractérisé en ce que**
la pièce de support (25) est fixée dans le boîtier d'engrenage (10) par le couvercle de boîtier (13) posé sur l'ouverture de boîtier (12).

4. Moteur selon la revendication 3,
**caractérisé en ce qu'**
au moins un élément élastomère (39) est disposé entre la face de la pièce de support (25) tournée vers le couvercle de boîtier (13) et la face intérieure du couvercle de boîtier (13).

5. Moteur selon la revendication 4,
**caractérisé en ce qu'**
au moins un élément élastomère fait partie d'un joint d'étanchéité (40) projeté sur le couvercle de boîtier (13), et est composé de préférence d'une matière de type caoutchouc projetée sur le couvercle de boîtier (13) fabriqué en matière plastique.

6. Moteur selon l'une quelconque des revendications 1 à 5,
**caractérisé en ce que**
pour la fixation des leviers élastiques (26) à la pièce de support (25), la pièce de support (25) présente des fentes (31) débouchant dans sa première face, et dans lesquelles les leviers élastiques (26) sont insérés avec serrage par leurs extrémités de levier (figure 3).

7. Moteur selon la revendication 6,
**caractérisé en ce que**
les fentes (31) dans la pièce de support (25) sont orientées pour positionner les leviers élastiques (26) exactement par rapport au collecteur (22) après l'insertion de leurs extrémités de levier dans la fente associée respective (31).

8. Moteur selon l'une quelconque des revendications 1 à 5,
**caractérisé en ce que**
les leviers élastiques (26) sont réalisés sous forme de pièces d'insertion, projetées en même temps du côté de l'extrémité lors de la fabrication de la pièce de support (25) en une pièce en matière plastique moulée par injection.

9. Moteur selon l'une quelconque des revendications 1 à 5,
**caractérisé en ce que**
les extrémités de levier des leviers élastiques (26) sont coudées et sont soudées aux ultrasons, vissées ou rabattues à chaud sur la face intérieure de la pièce de support (25) tournée vers l'ouverture en forme de U.

10. Moteur selon la revendication 9,
**caractérisé en ce que**
les leviers élastiques (26) sont réalisés d'une seule pièce les uns avec les autres et sont séparés les uns des autres, de préférence en des points de séparation préparés, après leur fixation sur la pièce de support (25).

11. Moteur selon l'une quelconque des revendications 1 à 10,
**caractérisé en ce que**
des pattes (28) sont formées sur les leviers élastiques (26) pour la fixation par complémentarité de formes et de forces des corps frotteurs (27).

12. Moteur selon l'une quelconque des revendications 1 à 11,
**caractérisé en ce que**
des accessoires de jonction (33) sont formés sur les extrémités libres des leviers élastiques (26), de préférence d'un seul tenant avec chaque levier élastique (26), pour pousser les leviers élastiques (26) sur le collecteur (22).

13. Moteur selon l'une quelconque des revendications 1 à 12,
**caractérisé en ce que**
des torons de raccordement (29) pour les corps frotteurs (27) sont fixés dans des fourches de serrage (30) formées sur la pièce de support (25), de préférence d'un seul tenant avec celle-ci.

14. Moteur selon l'une quelconque des revendications 1 à 13,
**caractérisé en ce qu'**
un interrupteur thermique (36) est encliqueté dans la pièce de support (25) et l'interrupteur thermique (36) est de préférence fixé sur une tôle de masse (361).
